# EUROPEAN PATENT APPLICATION

(11) **EP 2 196 721 A2**
(43) Date of publication of application: **16.06.2010**
(21) Application number: 09178770.5
(22) Date of filing: 10.12.2009
(51) Int. Cl.: F16M 11/22, G03B 17/56

(54) **Camera stand and cover**

(30) Priority: 11.12.2008 US 332988
(71) Applicant: Gary Fong, Inc., Seattle, WA 98101 (US)
(72) Inventor: Fong, Gary, Seattle, WA 98101 (US)
(74) Representative: Kensett, John Hinton

(57) **Abstract**

A stand (20) for a camera (10) with a threaded receptacle (34) is disclosed. The stand includes a base (60). at least two wings (22,24) hinged to the base, and a mounting peg (34) adapted to attach a camera to the base.

## Description

### FIELD OF THE INVENTION

The present invention relates to a stand for a camera, and more particularly, to a stand for a camera that is convertible to a protective camera cover.

### BACKGROUND

Many different types of stands are presently available to support cameras, such as digital and analog still cameras and video cameras. A number of these stands are rather bulky and are not convenient to transport. Furthermore, when the user wishes to use the stand, the stand must first be attached to the camera, which is time consuming. The stand also may add extra weight and volume to the equipment that the user must carry, and the user may not always be able to anticipate when a stand may prove useful.

### SUMMARY OF THE INVENTION

In an embodiment of the invention, a stand for a camera with a camera body and a camera stand receptacle is provided. The stand includes a base, at least two wings hinged to the base, and a mounting peg adapted to attach the camera body to the base.

The stand may have cameras of different sizes attached to the stand. Further, the wings may be adapted to be adjustable with a friction fit with the camera base, so that tightening the mounting peg would cause the camera body to press against the wings to fix a desired position of the wings. The wings may be of a material that absorbs shock.

The wings may be rotated to a position about the camera body to protect the camera. The wings may have a window so that the camera may be operated while the wings are about the camera body. The wings may be rotated to at least one position to provide an elevated support for the camera.

The mounting peg may include a locking knob with knurls. The base may also include a slot for the mounting peg to pass through so that the position of the camera relative to a stand may be adjusted. The wing may also include a foot adapted to prevent the stand from slipping.

### BRIEF DESCRIPTION OF THE DRAWINGS

FIG. 1 shows a perspective view of a stand for a camera according to an embodiment of the present invention with a camera attached.

FIG. 2 shows a perspective view of the stand for a camera of FIG. 1 in another position.

FIG. 3A shows an end view of the stand for a camera of FIG. 1, with no camera attached.

FIG. 3B shows an end view of the stand for a camera of FIG. 1, with a camera attached.

FIG. 4 shows a bottom view of the stand for a camera of FIG. 1, with no camera attached.

FIG. 5 shows a top view of the stand for a camera of FIG. 1, with no camera attached.

FIG. 6 shows a side view of the stand for a camera of FIG. 1, with no camera attached.

FIG. 7A shows an end view of the stand for a camera of FIG. 1, with a camera attached.

FIG. 7B shows an end view of the stand for a camera of FIG. 1, with a different camera attached.

FIG. 8 shows a top view of a stand for a camera according to another embodiment of the present invention.

### DETAILED DESCRIPTION

In the following detailed description, certain exemplary embodiments of the present invention are shown and described, by way of illustration. As those skilled in the art would recognize, the described exemplary embodiments may be modified in various ways, all without departing from the spirit or scope of the present invention. Accordingly, the figures and description are to be regarded as illustrative in nature, rather than restrictive.

The present stand for a camera provides support and adjustable elevation for a camera in a support position and protection for and continued operation of the camera when it is not being utilized as a stand in a protection position.

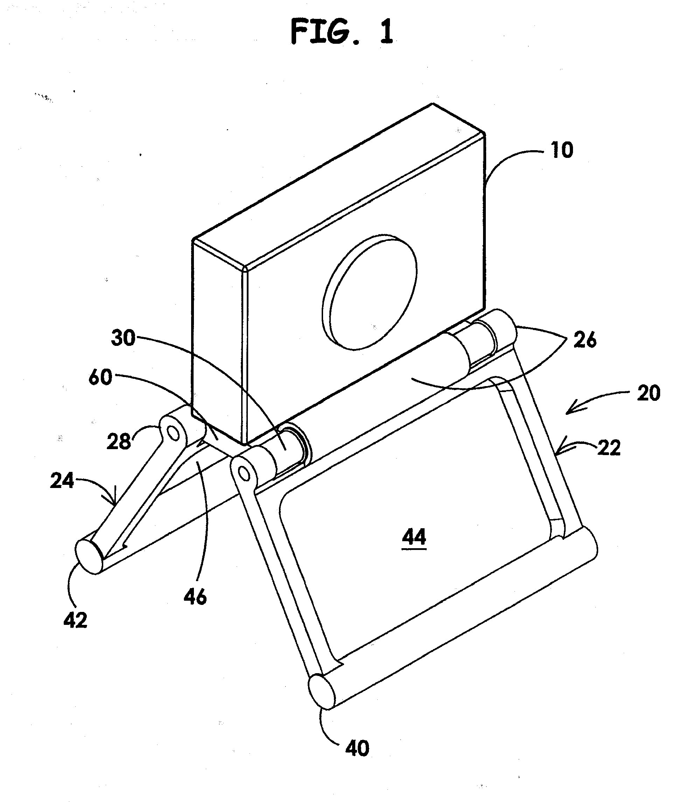

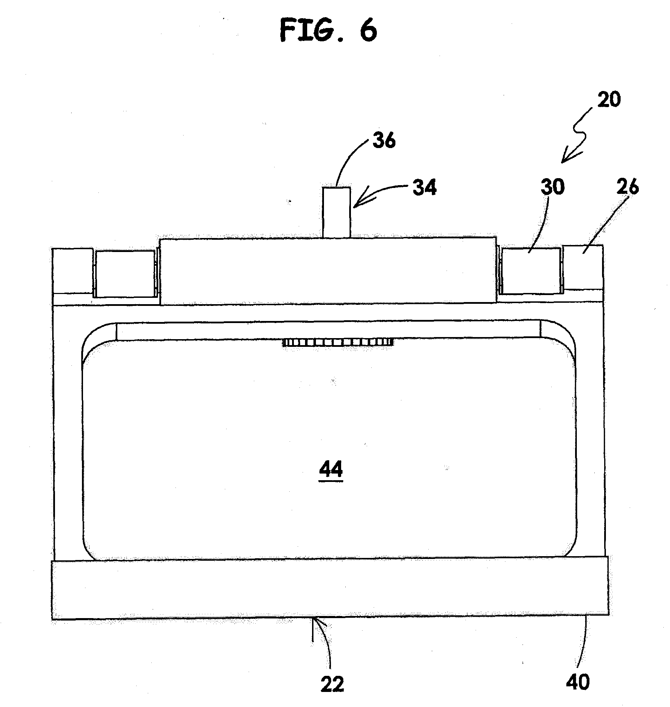

FIGs. 1, 4, 5, and 6 show a perspective view of a stand 20 in a support position for a camera with a camera body 10 according to an embodiment of the present invention. In FIG. 1, the stand 20 is positioned so that the stand 20 is providing support and elevation for the camera body 10. The stand 20 includes a base 60, with a first wing 22 and a second wing 24, each hinged to the base. According to the embodiment illustrated, the base 60 is of a generally rectangular shape with the wings 22, 24 arranged on opposite edges of the base 60. The width of the base 60 is about the same size as the width of an average compact camera body, such as is used with a "point-and-shoot" camera, and the depth of the base 60 is slightly larger the thickness of an average compact camera body. The widths of the wings 22, 24 are slightly longer than the width of an average camera body, and the heights of the wings 22, 24 are slightly higher the height of an average camera body. In one embodiment of the present invention, the base 60 may be approximately 1 to 1.5 inches wide and the wings 22, 24 may be approximately 4 to 5 inches long and 3 to 4 inches high.

In another embodiment of the present invention, the dimensions of the stand may be suitably modified to operate with other types of cameras, such as video cameras. For example, the base may be approximately 1 inch wide and the wings may be approximately 2 inches long and 4 inches high. In still another embodiment of the present invention, the dimensions of the stand may be scaled up or down to fit other types of cameras of various shapes and sizes.

According to this embodiment, the first and second wings 22, 24 are of a generally rectangular frame-shape. The first wing 22 includes three first wing knuckles 26 and the second wing 24 includes three second wing knuckles 28 that each mate with a pair of corresponding first and second base knuckles 30, 32, respectively, on an edge of the base 60. Each of the wing knuckles 26, 28 and base knuckles 30, 32 is of a generally hollow cylindrical shape, and a pair of hinge pins are inserted through the mating wing knuckles 26, 28 and base knuckles 30, 32, respectively, to form a pivoting joint between the base 60 and each wing 22, 24, similar to door hinges. One of ordinary skill in the art would appreciate that more or fewer knuckles can be used in forming the joints between the wings and the base. Moreover, any one of a number of other different hinge configurations can be adapted to form pivoting joints between the wings 22, 24 and the base 60.

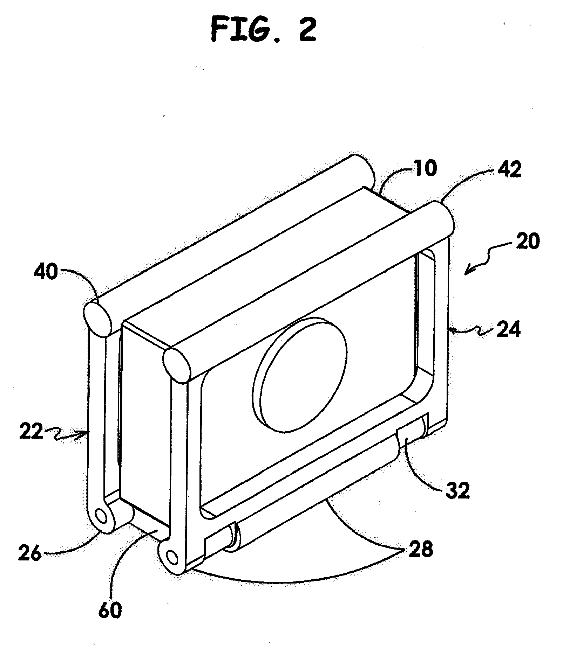

FIG. 2 shows a perspective view of the stand 20 of FIG. 1 positioned in a protection position so that the stand 20 is compactly stored and provides protection for the camera body 10 in the event that it is bumped or dropped. For example, the wings 22, 24 may be formed of a semi-flexible material that can absorb shock, such as plastic or rubber. The base 60 may be formed of the same material as the wings 22, 24 or may be formed of a different material that may or may not be a semi-flexible material that can absorb shock. Additionally, the base 60 and wings 22, 24 may be formed of a rigid material, such as metal, and may be coated with a shock-absorbing material, such as rubber. The wings 22, 24 and the base 60 may be colored the same color as the camera so that the stand is less noticeable, or they may be other desired colors, or patterns of colors such as camouflage. Further, the wings 22, 24 and the base 60 may be clear.

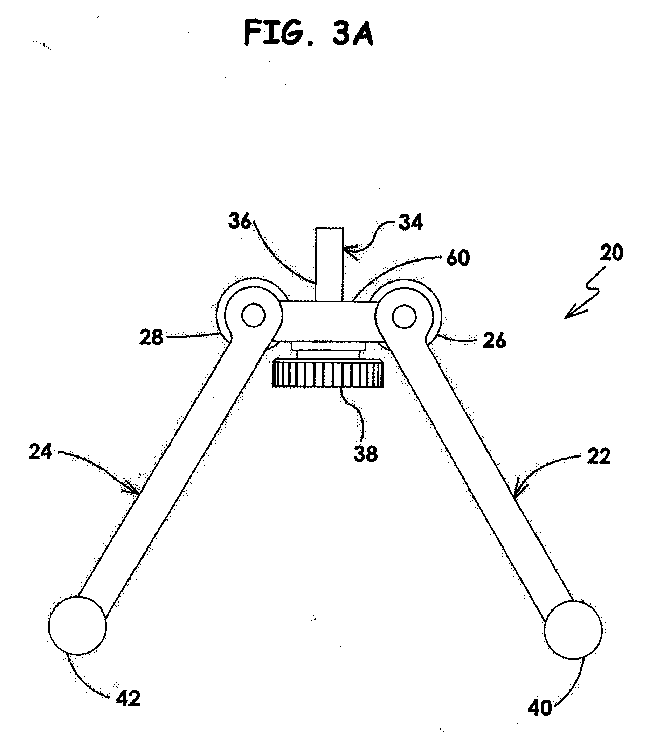

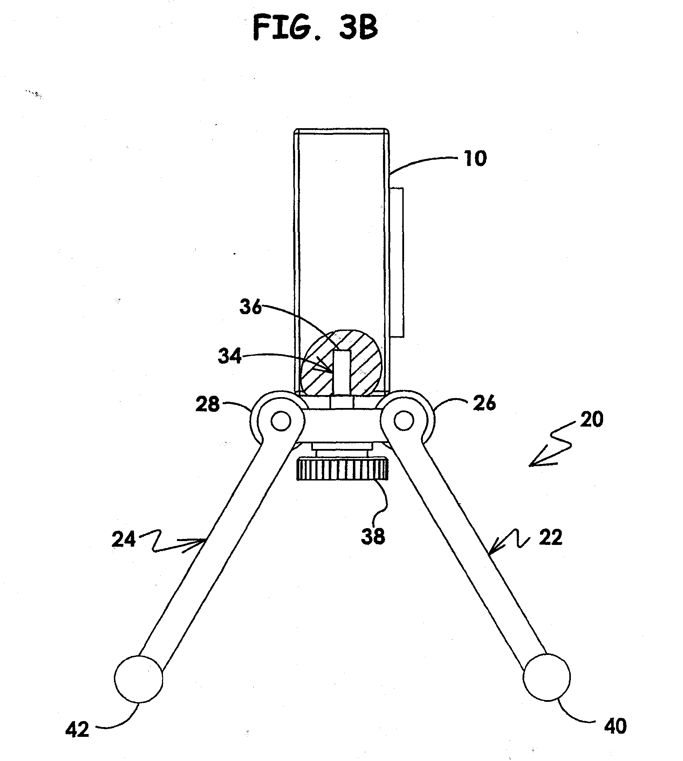

Many cameras are available with a standard size camera stand receptacle for receiving a tripod or another camera stand. For example, a threaded receptacle is often provided on the camera body. As shown in FIGs. 3A and 3B, the camera body 10 is attached to the stand 20 by a mounting peg 34 with a post 36, such as a threaded post, that is compatible with these cameras. The mounting peg 34 also includes a locking knob 38, which may be knurled. In one embodiment of the present invention, where the post 36 is a threaded post, a user twists the locking knob 38 to loosen or tighten the mounting peg 34 to mount the camera body 10 and operate the stand 20.

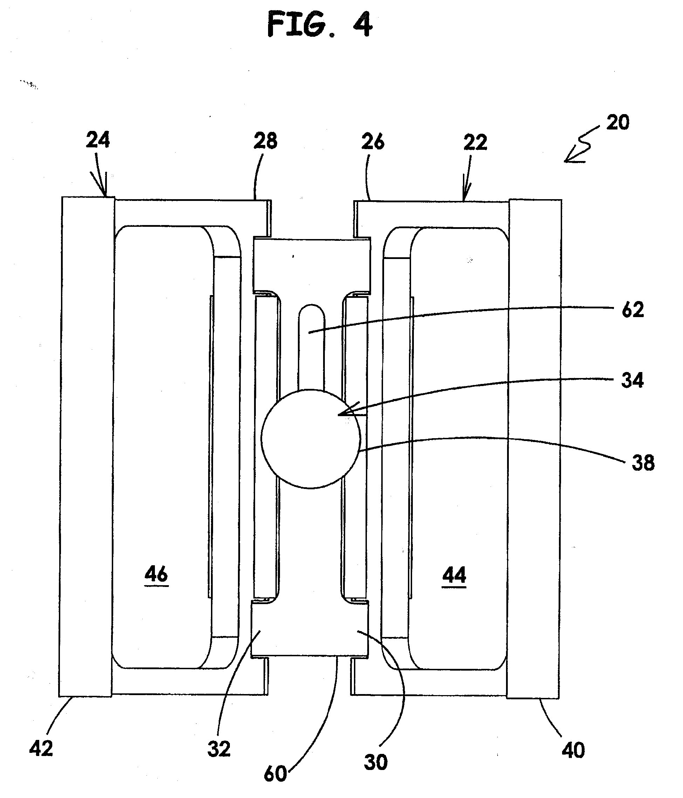

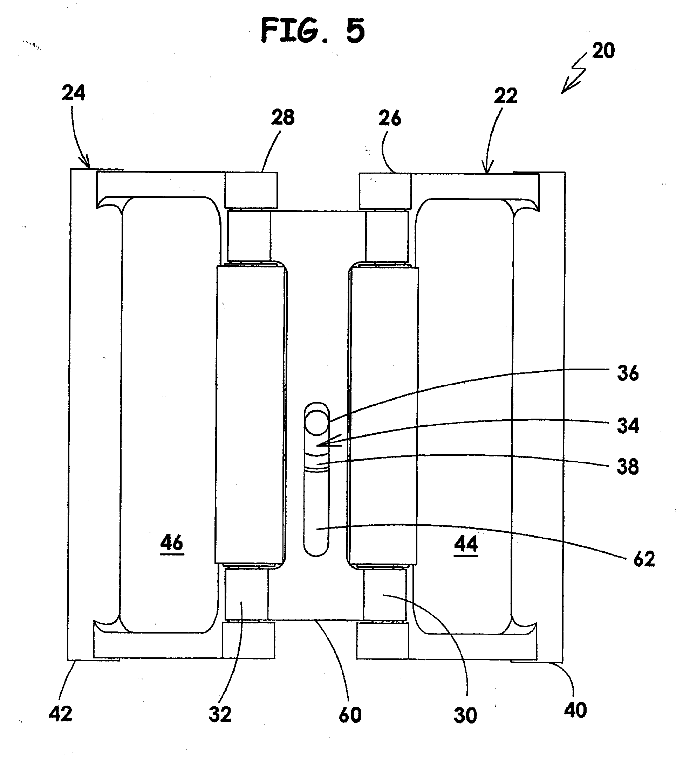

As shown in FIGs. 4 and 5, a slot 62 is located in the base 60, and the length of the slot 62 runs along a portion of the length of the base 60. The post 36 of the mounting peg 34 extends through the slot 62 and into the standard size camera stand receptacle of the camera body 10. The locking knob 38 prevents the mounting peg 34 from entirely passing through the slot 62 and keeps the camera body 10 securely fixed to the stand 20. The slot 62 allows for adjustment of the position of the camera body 10 relative to the base 60. For example, to better center the weight of the camera body 10 or adjust the frame of the picture to be taken with the camera, the user may want to slide the camera body 10 relative to the base 60 by moving the mounting peg 34 along the length of the slot 62 prior to tightening the mounting peg 34. The slot 62 also allows the stand 20 to be used with a variety of different cameras.

In one embodiment of the present invention, the post 36 has a portion located away from the locking knob 38 that is threaded, and a portion located near the locking knob 38 that is not threaded. Once the post 36 has passed through the slot 62 and been screwed into the camera stand receptacle of the camera body 10, the portion of the post 36 that is not threaded is the portion that is positioned within the slot 62, in this embodiment. Here, because the portion of the post 36 within the slot 62 is not threaded, the mounting peg 34 is more easily moved along the length of the slot 62 for adjustment of the position of the camera.

In another embodiment of the present invention, the slot 62 may have an enlarged section at one end of the slot 62. For example, the enlarged section may have a circular shape, and the enlarged section may be threaded or a thread may be formed by the insertion of a threaded post 36. The enlarged section may be sized so that the post 36 may be inserted through the enlarged section. Here, once a threaded portion of the post 36 is inserted through the enlarged section of the slot 62, a portion of the post 36 that is not threaded may be easily slid along the length of the slot 62, and the threaded portion of the post 36 will prevent the mounting peg 34 from slipping out of the slot 62.

In another embodiment of the present invention, the post 36 may be press-fit through the slot 62.

As shown in FIG. 3B, tightening the mounting peg 34 presses the camera body 10 into the first wing knuckles 26 and the second wing knuckles 28. As the camera body 10 presses into the first wing knuckles 26 and the second wing knuckles 28, the wings 22, 24 are prevented from rotating with respect to the base 60. Here, friction between the camera body 10 and the first and second wing knuckles 26, 28, locks the wings 22, 24 in position and prevents the wings 22, 24 from rotating. Hence, a user may position the wings 22, 24 in desired positions, and then tighten the mounting peg 34 to fix the position of the wings 22, 24 with respect to the base 60. To change the position of the wings 22, 24, the user may loosen the mounting peg 34, move the wings 22, 24 to the new desired position, and then tighten the mounting peg 34 again.

For example, a user may position the wings 22, 24 as shown in FIG. 1 to elevate and support the camera on a surface so that the camera body 10 may be utilized in a hands-free manner, such as with a timer, for time-lapse photography, or for capturing video. The user may adjust the height of the stand 20 by loosening the mounting peg 34, moving the wings 22, 24 apart to lower the stand 20 or moving the wings 22, 24 together to raise the stand 20, and then tightening the mounting peg 34.

The user may later choose to reposition the wings 22, 24 as shown in FIG. 2 to protect the camera body 10 from accidental bumps and store the stand 20 compactly. Here, the user would loosen the mounting peg 34, rotate the wings 22, 24 so that they are adjacent to the camera body 10, and then tighten the mounting peg 34 to fix the new position of the wings 22, 24 with respect to the camera body 10. Further, the user may want to slide the mounting peg 34 along the slot to better position either the entire camera or the majority of the camera within the wings 22, 24.

As shown in FIGs. 1, 2, and 3B, the frame-shaped first wing 22 has a first foot 40 and the frame-shaped second wing 24 has a second foot 42. The first and second feet 40, 42 may be formed of the same material as the wings 22, 24. Alternatively, the first and second feet 40, 42 may be formed of a different material than the wings 22, 24 or may be coated with a material, such as rubber or plastic, that will reduce the likelihood that the stand 20 will slip while in use. Further, the first and second feet 40, 42 may have a textured surface, such as nodules or raised strips to further decrease the likelihood that the stand 20 will slip.

In another embodiment of the present invention, the first and second wing knuckles 26, 28 may be coated with a resilient material, such as rubber, plastic, or foam, into which the camera body 10 will press when the mounting peg 34 is tightened. Here, the resilient material increases the friction between the camera body 10 and the first and second wing knuckles 26, 28 to better fix the position of the wings 22, 24 when the mounting peg 34 is tightened.

As shown in FIG. 1, 2, and 6, a first window 44 in the frame-shaped first wing 22, and a second window 46 in the frame-shaped second wing 24 allow a typical camera to be operated while the wings 22, 24 are positioned about the camera body 10 in the protection position. Here, the lens of the camera may extend through or receive light through one of the windows, for example the first window 44. Also, a camera flash may emit light through this window. Further, the user may peer through the view finder or at a display screen through one of the windows, for example, the second window 46. Additionally, the user is able to operate any controls for the camera that are located on the top or sides of the camera, such as the shutter release button typically located on top of a camera.

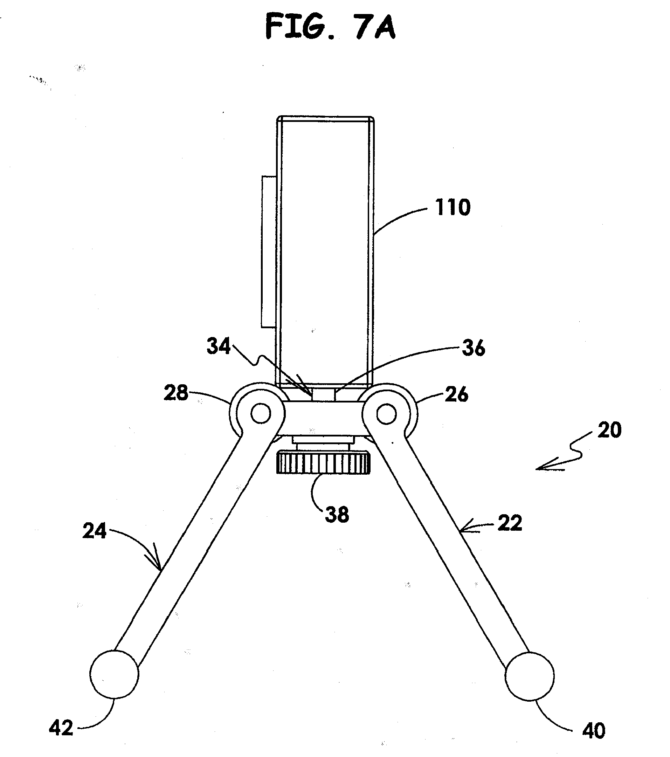

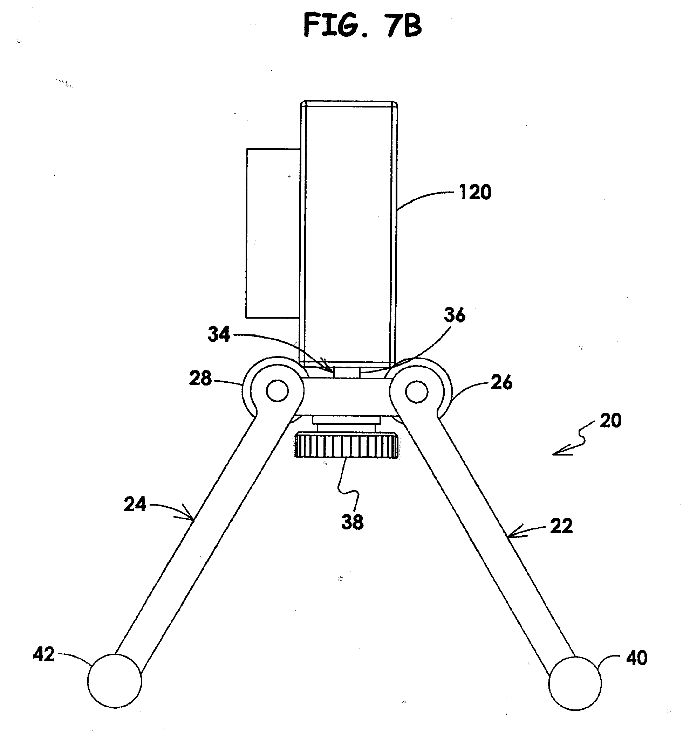

As shown in FIGs. 7A and 7B, cameras of different sizes may be utilized with the stand 20 in one embodiment of the present invention. For example, a larger camera body 110 may be attached to the stand 20, as shown in FIG. 7A. Here, the mounting peg 34 is not tightened as much as it would be with a smaller camera body. Further, the edges of the camera body 110 interfere with a different position on the wings 22, 24, than a smaller camera body would. However, because the position of the camera body 110 may be adjusted by loosening (or tightening) the mounting peg 34, the stand 20 may operate with the larger camera body 110 in both the support position and the protection position.

As shown in FIG: 7B, a smaller camera body 120 may be utilized with the stand 20. Here, the mounting peg 34 is tightened more than it is with the larger camera body 110 of FIG. 7A. However, because the position of the camera body 120 may be adjusted by tightening (or loosening) the mounting peg 34, the stand 20 may operate with the smaller camera body 120 in both the support position and the protection position.

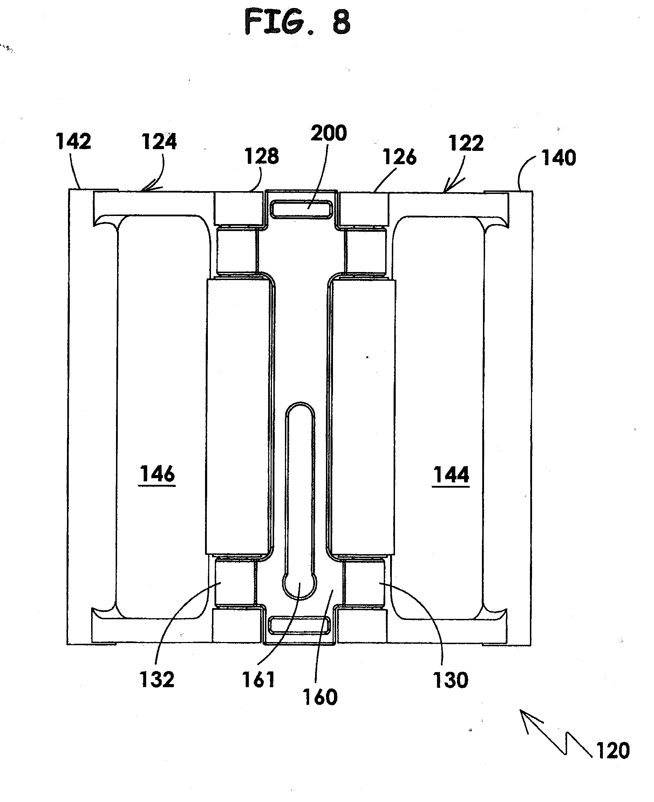

As shown in another embodiment of the present invention in FIG. 8, a stand 120 includes a base 160 with a slot 161 and base knuckles 130, 132, and a first wing 122 with first wing knuckles 126 and a second wing 124 with second knuckles 128, each wing 122, 124 being hinged to the base 160 as described above. The wings 122, 124 have feet 140, 142, respectively, and windows 144, 146, respectively. Here, the base 160 also has at least one camera strap slot 200 suitable for receiving a camera strap for carrying a camera. Here, a user may insert the camera strap through the camera strap slot 200 so that the user may carry the stand 120 by the camera strap either without or with a camera attached to the stand 120.

While this invention has been described in connection with what are considered to be exemplary embodiments, it is to be understood that the invention is not limited to the disclosed embodiments, dimensions, and configurations, but, on the contrary, also extends to various modifications and equivalent arrangements.

## Claims

1. A stand for a camera of the type including a camera body and a camera stand receptacle, the stand comprising:
a base;
at least two wings hinged to the base; and
a mounting peg adapted to attach the camera body to the base.

2. A stand as claimed in claim 1 wherein the wings are frame-shaped.

3. A stand as claimed in claim 1 or 2 wherein the wings are rotatable to a position about the camera body to protect the camera.

4. The stand of any preceding claim 1 or 2 adapted such that cameras of different sizes are attachable to the stand.

5. The stand of any preceding claim, wherein the wings are adapted to be adjustable with a friction fit against the camera base and where tightening the mounting peg causes the camera body to press against the wings to fix a desired position of the wings.

6. The stand of any preceding claim, wherein the wings comprise a material that absorbs shock.

7. The stand of any preceding claim, wherein each of the wings define a window so that the camera may be operated while the wings are about the camera body.

8. The stand of any preceding claim, wherein the wings are rotatable to at least one position to provide an elevated support for the camera.

9. The stand of any preceding claim, wherein the mounting peg further comprises a locking knob with knurls.

10. The stand of any preceding claim, wherein the base further comprises a slot for the mounting peg to pass through so that the position of the camera relative to a stand may be adjusted.

11. The stand of any preceding claim, wherein the wing further comprises a foot adapted to prevent the stand from slipping.
